**Europäisches Patentamt**

**European Patent Office**

**Office européen des brevets**

(11) Veröffentlichungsnummer: **0 399 082**
**A1**

## (12) EUROPÄISCHE PATENTANMELDUNG

(21) Anmeldenummer: 89109521.8

(22) Anmeldetag: 26.05.89

(51) Int. Cl.⁵: **G06F 9/44, G06F 15/40**

(43) Veröffentlichungstag der Anmeldung:
**28.11.90 Patentblatt 90/48**

(84) Benannte Vertragsstaaten:
**AT BE CH DE ES FR GB GR IT LI LU NL SE**

(71) Anmelder: **Liebel, Franz-Peter, Dr.**
**Am Petersberg 61**
**D-4800 Bielefeld(DE)**

(72) Erfinder: **Liebel, Franz-Peter, Dr.**
**Am Petersberg 61**
**D-4800 Bielefeld(DE)**

(54) **Verfahren zur Ermittlung der wahrscheinlichsten Ursache eines Leitsymptoms durch die Propagierung von Wissen in einem Kausalnetz.**

(57) Das Verfahren dient zur Erkennung der Ursachen eines vorgegebenen Störfalls, inbesondere zur Erkennung der Ursachen eines bestimmten, besonders herausgehobenen Leitsymptoms.

Hierzu wird aus einfachen Bauelementen ein Kausalnetz aufgebaut, für dessen einzelne Netzknoten die Zutreffenswahrscheinlichkeiten unter Berücksichtigung aller relevanten Einflüsse berechnet werden. Durch die Berücksichtigung aller Ereignisse, die die Wahrscheinlichkeit eines Netzknotens beeinflussen können, wird das Wissen über das Vorliegen oder Nicht-Vorliegen eines Knotens durch das Kausalnetz fortgepflanzt.

Zur Berechnung der Zutreffenswahrscheinlichkeiten der Netzknoten werden Wahrscheinlichkeits-Zahlenwerte benötigt, die als Näherungen aus Stichproben gewonnen werden, die günstigerweise jeweils unter der Bedingung des Vorliegens eines konkreten Systemzustands und für eine begrenzte Netzumgebung erhoben werden.

Eine sogenannte Selbstständigkeits-Analyse ermöglicht es schließlich, die eigentlichen Verursacher des Leitsymptoms und, durch Wiederholung des Verfahrens, im Bedarfsfall auch eine kausale Verkettung zu ermitteln.

EP 0 399 082 A1

# VERFAHREN ZUR ERMITTLUNG DER WAHRSCHEINLICHSTEN URSACHE EINES LEITSYMPTOMS DURCH DIE PROPAGIERUNG VON WISSEN IN EINEM KAUSALNETZ

B) Verwendbarkeit der Erfindung

Die Erfindung ist dann zu verwenden, wenn bei einem Störfall die Ursachen eines konkreten Symptoms bestimmt werden sollen, wobei durch die Vielzahl der möglichen Ursachen und ihrer eventuellen Interaktionen, sowie durch die Vielzahl der zu berücksichtigenden Verknüpfungen ein Kausalitätszusammenhang ohne technische Hilfsmittel nicht mehr zu ermitteln ist.

Die Erfindung ist weiterhin dann einzusetzen, wenn mit Hilfe einer vorgegebenen Merkmalsmenge die Zutreffenswahrscheinlichkeiten von Hypothesen zu bestimmen sind, und wenn dabei auch die gegenseitige Beeinflussung der im allgemeinen mit unbekannter Wahrscheinlichkeit vorliegenden Hypothesen berücksichtigt werden soll.

Es ist das Ziel der Erfindung, jeder Person und jeder Institution mittels Rechnern die Möglichkeit zu verschaffen, das laufend aktualisierbare Wissen von Experten unmittelbar zu nutzen. Als Wissensgebiete kommen hierfür die Human- und Veterinärmedizin in Frage, sowie Gebiete der Technik und der Sport-,Leistungs- und Ernährungsphysiologie. So kann z.B. in der Medizin bei Kenntnis einiger Symptome nach der Zutreffenswahrscheinlichkeit von Hypothesen gefragt werden, und es kann gefragt werden, mit welcher Wahrscheinlichkeit solche Hypothesen ein konkretes, besonders störendes Leitsymptom verursacht haben.

C) Stand der Technik und Vorteile des Verfahrens

I) Bestehende Konzeptionen berechnen für eine definierte Menge von Hypothesen die Wahrscheinlichkeiten ihres Auftretens unter der Bedingung des Vorliegens einer Anzahl von Merkmalen.

Verbesserung:

Das vorliegende Verfahren berücksichtigt bei der Berechnung der Zutreffenswahrscheinlichkeit von Netzknoten alle Umgebungs-Netzknoten, insbesondere also auch solche Knoten, deren Zutreffenswahrscheinlichkeit ebenfalls erst berechnet werden soll.

II) Bisher besteht keine Möglichkeit, bei einer nicht-trivialen Situation den tatsächlichen Verursacher eines konkreten Systemzustands zu ermitteln.

Verbesserung:

Nach der Berechnung der Zutreffenswahrscheinlichkeiten der Netzknoten wird für die unmittelbaren Ursachen des Leitsymptoms eine sogenannte Selbstständigkeits-Analyse durchgeführt. Hieraus ergeben sich im allgemeinen Verbunde von Netzknoten, für die angenommen wird, daß sie "selbstständig" das Leitsymptom verursachen, so daß dann auch die Wahrscheinlichkeit angegeben werden kann, mit der dies geschieht.

III) Für bestehende Konzepte werden Stichproben eingesetzt, bei denen jede Stichproben-Ausführung stets Angaben zu allen zugelassenen Merkmalen enthalten muß.

Verbesserung:

Bei einer besonderen Struktur des Kausalnetzes werden
- nur "bedingte" Stichproben benötigt, d.h. Stichproben unter der Bedingung des Vorliegens eines konkreten Systemzustands, und
- die Stichproben müssen nur Angaben zu einer eng begrenzten Anzahl von Merkmalen aufweisen.

D) Darstellung der Lösung und Beispiele

Der Erfindung liegt folgendes Geräte-Schema zugrunde:

| Gerät | | | |
|---|---|---|---|
| Verfahrenssteuerung | | | |
| Bauteil I | Bauteil II | Bauteil III | Bauteil IV |
| Aufbau des Kausalnetzes | Berechnung des Kausalnetzes | Stichproben | Ermittlung kausaler Zusammenhänge |

Die Darstellung des Verfahrens wird deshalb in vier Teile gegliedert:
 I) Aufbau des Kausalnetzes
 II) Berechnung des Kausalnetzes
 III) Aufbau und Auswertung der Stichproben
 IV) Ermittlung kausaler Zusammenhänge.

## I) Aufbau des Kausalnetzes

## 1) Bauelemente

### a) Struktur und Einteilung der Netzknoten

Die Netzknoten des zu erstellenden Kausalnetzes bestehen aus
- der Nummer und dem Namen des Netzknotens,
- beliebig vielen hinführenden Kausalverweisen mit Angabe des verursachenden Netzknotens,
- beliebig vielen wegführenden Kausalverweisen mit Angabe des verursachten Netzknotens.

Schema:

hinführende Kausalverweise

Netzknoten-Typ
und Netzknoten-Nr.   H5    ( zusätzlich
Netzknoten-
Namen )

wegführende Kausalverweise

Es werden Netzknoten verwendet, die nur hinführende, nur wegführende oder hin- und wegführende Kausalverweise besitzen. Außerdem unterscheiden sich die Netzknoten dadurch, daß ihre Zutreffenswahrscheinlichkeit direkt gemessen werden kann, oder aber anhand der umgebenden Netzknoten berechnet werden muß. Eine Einteilung der Netzknoten wird deshalb wie folgt vorgenommen:

3

| Netzknoten-Typ | Abkürzung | Kausalverweise | direkte Messung |
|---|---|---|---|
| Hypothesen-Netzknoten | H-Knoten | wegführende, hinführende beliebig | nein |
| Evidence-Netzknoten | E-Knoten | nur hinführende | ja |
| Ursache-Netzknoten | U-Knoten | wegführende, hinführende beliebig | ja |
| Leitsymptom-Netzknoten | L-Knoten | hinführende, wegführende beliebig | ja |

b) Nummer und Namen des Netzknotens

Die Knoten des Netzes werden in geeigneter Weise nummeriert. Durch die Angabe des Netzknoten-Typs zusammen mit der Netzknoten-Nr. erreicht man eine brauchbare Identifizierung der Knoten. So bedeutet z.B. H5: Knoten Nr.5 des Netzes, Typ H-Knoten.

Der Netzknoten entspricht einem definierten Zustand des untersuchten Systems. Der Name des Netzknotens ist deshalb eine möglichst kurze, eindeutige Charakterisierung dieses Zustands. Die Namensbildung muß, im Hinblick auf die automatisierte Suche in entsprechenden Listen, definierten Gesetzmäßigkeiten folgen.

Beispiel (Medizin):

Kompression der Hirngefäße.

Netzknoten-Namen:

Hirn, Gefäße, Kompression.

Im Beispiel ist der Name so gebildet, daß zuerst der Ort des Geschehens und danach die Art des Geschehens angegeben wird. Solche Festlegungen ermöglichen dann Rechnerprogramme, die aus einer umgangssprachlich gefaßten Beschreibung die möglichen Netzknoten-Namen bilden und im Dialog mit dem Benutzer den gesuchten Terminus in gespeicherten Namenslisten auffinden.

c) Netzknoten-Typen

Die Netzknoten werden unterteilt in
- Knoten mit wegführenden Kausalverweisen, und in
- Knoten ohne wegführende Kausalverweise.

Die Knoten, die wegführende Kausalverweise besitzen, werden wiederum unterschieden in
- Knoten, deren Zutreffenswahrscheinlichkeit direkt gemessen oder beobachtet werden kann, und in
- Knoten, deren Zutreffenswahrscheinlichkeit anhand des Vorliegens, oder Nicht-Vorliegens der Umgebungs-Knoten berechnet wird.

Deshalb wird festgelegt:

$\{ H_\mu | \mu = 1,...,m \}$ ist die Menge der Netzknoten, die wegführende Kausalverweise besitzen, und die nicht unmittelbar gemessen werden können. Für ein beliebiges $H_{\mu 0}$ kann $p(H_{\mu 0} ( H_\mu \overset{!}{\circ} )$ also nicht unmittelbar bestimmt, sondern muß aus den Gegebenheiten der Netz-Umgebung berechnet werden.

$\{ E_\gamma | \gamma = 1,...,n \}$ ist die Menge der Netzknoten ohne wegführende Kausalverweise. Für ein beliebiges $E_{\gamma 0}$ kann der Wert $p(E_{\gamma 0} | E_\gamma \overset{!}{\circ} )$ stets unmittelbar gemessen oder beobachtet werden.

$\{ U_x | x = 1,...,k \}$ ist die Menge der Netzknoten mit wegführenden Kausalverweisen, wobei für beliebiges $U_{x 0}$ der Wert $p(U_{x 0} | U_x \overset{!}{\circ} )$ unmittelbar bestimmt werden kann.

$\{ N_\lambda | \lambda = 1,...,l \}$ ist die Gesamtmenge der Netzknoten, so daß es sich bei beliebigem $N_{\lambda 0}$ um einen H-, E-, U- oder den L-Knoten handeln kann.

Beispiel 1:

**A b b .  1 :**

Beispiel eines Netzausschnitts mit H-, E-, U-, L-Knoten. Die Nummerierung der Knoten ist willkürlich. Nicht direkt meßbare Knoten sind mit ⊡ gekennzeichnet.

## 2. Aufbau des L-Netzes

### a) Definition und Begrenzung des L-Netzes

**Definition (L-Netz)**

Ein Kausalnetz, das von einem Leitsymptom-Knoten (L-Knoten) aus dadurch aufgebaut wird, daß die in Abschnitt D)I)1) definierten Bauelemente so lange an unbesetzte Kausalverweise angebracht werden, bis eine beliebig festlegbare Ausdehnung erreicht ist, heißt L-Netz.

Der Zweck des aufzubauenden Kausalnetzes ist u.a. die Ermittlung der Ursachen des Leitsymptoms bzw. die Ermittlung einer Kausalkette, an deren Ende das Leitsymptom steht. Die Aufgabe ist es somit, die Zutreffenswahrscheinlichkeiten derjenigen Knoten möglichst genau zu bestimmen, die Ursache des L-Knotens oder Teil einer zum L-Knoten führenden Kausalkette sind. Hierzu wird definiert:

**Definition (Knoten mit L-Verbindung)**

Ein Netzknoten des L-Netzes heißt Knoten mit L-Verbindung, wenn er über beliebig viele Zwischenknoten stets in Kausalrichtung mit dem L-Knoten verbunden ist.

Ist ein solcher Knoten mit L-Verbindung ein nicht direkt meßbarer Knoten, so wird seine Zutreffenswahrscheinlichkeit durch die Elemente seiner in Abschnitt D)II)1) definierten Wertungsumgebung bestimmt, wobei jeder H-Knoten aus einer solchen Wertungsumgebung wieder eine eigene, seine Zutreffenswahrscheinlichkeit bestimmende Wertungsumgebung besitzt. Hierdurch ergibt sich eine Propagierung von Wissen durch das Kausalnetz.

Eine Begrenzung der Netzausdehnung ist nun so vorzunehmen, daß die Fortpflanzung des durch Netzabbruch entstehenden Fehlers nur einen geringen Einfluß auf die Zutreffenswahrscheinlichkeiten der Knoten mit L-Verbindung ausübt. Es werden deshalb folgende L-Netz-Begrenzungen gewählt:

**Begrenzungsvorschrift 1**

Die wegführenden Kausalverweise eines Knotens ohne L-Verbindung werden nur noch mit direkt meßbaren Knoten versehen, wobei im Falle eines angefügten U-Knotens alle weiteren Kausalverweise dieses Knotens nicht weiter besetzt werden.

Begrenzungsvorschrift 2

Die hinführenden Kausalverweise von H-Knoten ohne L-Verbindung oder von E- bzw. U-Knoten, die keinen Knoten mit L-Verbindung als unmittelbare Ursache besitzen, werden nur dann mit Netzknoten besetzt, wenn diese Knoten bereits durch eine andere Legitimation im Netz vorhanden sind.

Begrenzungsvorschrift 3

Die Anzahl der H-Knoten einer Kausalkette, an deren Ende der L-Knoten steht, wird auf k begrenzt.

Durch die Begrenzungsvorschrift 1 wird erreicht, daß von einem Knoten mit L-Verbindung aus das L-Netz in Kausalrichtung nach spätestens zwei Schritten abgebrochen wird.

Abb. 2:

Schema des Netzaufbaus in Kausalrichtung, ausgehend von einem Knoten mit L-Verbindung. Nicht besetzte Kausalverweise sind mit einem Querstrich abgeschlossen.

Durch die Begrenzungsvorschrift 2 verhindert man die Ausdehnung des Netzes in "waagrechter" Richtung.

Abb. 3:

Schema des Netzaufbaus in "waagrechter" Richtung, ausgehend von einem Knoten mit L-Verbindung. Nicht besetzte Kausalverweise sind durch einen Querstrich abgeschlossen.

Die Begrenzungsvorschrift 3 schließlich verhindert die Ausdehnung des Netzes entgegen der Kausalrichtung.

b) Netz-Ebenen

Zur Verbesserung der Uebersichtlichkeit werden Netzebenen eingeführt.

Dem L-Knoten wird die Ebene 0 zugeordnet. Soll beim Netzaufbau der hinführende Kausalverweis eines Knotens am Pfeilanfang besetzt werden, so wird der anzufügende Knoten in der darüber liegenden Ebene angeordnet; wird ein wegführender Kausalverweis besetzt, so wird der anzufügende Knoten, falls es sich um einen H- oder U-Knoten handelt, in der darunter liegenden Ebene eingefügt.

Soll der wegführende Kausalverweis eines Knotens der Ebene x mit einem E-Knoten versehen werden, so wird der E-Knoten in einer zur Ebene x gehörenden, nur für E-Knoten vorgesehene Schichtung eingeordnet. Dadurch wird eine Ebene unterteilt in die H-/U-Teilebene und in die darunter angeordnete E-Teilebene.

Beispiel 2:

Abb. 4: Ebenen.

c) Aufbau-Algorithmus

Mit den willkürlich gewählten Begrenzungsvorschriften 1,2 und 3 kann ein L-Netz mittels eines einfachen Algorithmus wie folgt aufgebaut werden:

Schritt 1

Alle hinführenden Kausalverweise des L-Knotens werden an den Pfeilanfängen mit Knoten besetzt.

Ordnungsvorschrift:

Die hinzugefügten Knoten werden in der Ebene 1 angeordnet.

Schritt 2

Alle hinführenden Kausalverweise von Knoten mit einer L-Verbindung werden an den Pfeilanfängen mit Knoten besetzt, falls die Kausalkette zum L-Knoten weniger als k H-Knoten aufweist; ansonsten werden Abschluß-Symbole angebracht.

Ordnungsvorschrift:

Soll an den hinführenden Kausalverweisen eines beliebigen Knotens $N_{\lambda_0}$ ein Element angebracht werden, das im Netz bereits vorhanden ist, so behält dieses Element seinen Platz und wird lediglich mit den entsprechenden Verweisen ausgestattet; ansonsten wird es in der oberhalb von $N_{\lambda_0}$ liegenden Ebene eingefügt.

Schritt 3

Alle wegführenden Kausalverweise von Knoten mit einer L-Verbindung werden an den Pfeilenden mit Netzknoten besetzt.

Ordnungsvorschrift:

Ist der anzufügende Knoten bereits vorhanden, so müssen nur die entsprechenden Verweise angebracht werden; ansonsten werden E-Knoten in der E-Teilebene, die H-oder U-Knoten in der darunter liegenden H--U-Teilebene eingefügt.

Schritt 4

Alle hinführenden Kausalverweise von E- oder U-Knoten, unter deren unmittelbaren Ursachen sich ein H-Knoten mit einer L-Verbindung befindet, werden an den Pfeilanfängen mit Knoten besetzt.

Ordnungsvorschrift:

wie bei Schritt 2.

Schritt 5

Die wegführenden Kausalverweise von Knoten ohne L-Verbindung werden an den Pfeilenden nur dann mit einem Knoten versehen, wenn ein E- oder ein U-Knoten angefügt werden soll; ansonsten wird ein Abschluß-Symbol angebracht.
Alle weiteren Kausalverweise eines so angebrachten U-Knotens werden abgeschlossen.

Ordnungsvorschrift:

wie bei Schritt 3.

Schritt 6

Die hinführenden Kausalverweise von H-Knoten ohne L-Verbindung, sowie von E- oder U-Knoten, die keinen H-Knoten mit einer L-Verbindung unter ihren unmittelbaren Ursachen haben, werden mit einem Abschluß-Symbol besetzt.

Schritt 7

Falls das Netz noch unbesetzte Kausalverweise aufweist, gehe nach Schritt 2; ansonsten terminiere den Netzaufbau.

Zyklenvorschrift:

Da eine Kausalkette nicht in sich geschlossen sein kann, ist das L-Netz per definitionem zyklenfrei.

Enthält das Netz also Zyklen, so beruhen sie auf fehlerhaften Zuordnungen, die beseitigt werden müssen. Die Zyklen des L-Netzes lassen sich prinzipiell dadurch feststellen, daß für jeden H- oder U-Knoten mit wegführenden Kausalverweisen alle Möglichkeiten untersucht werden, durch Fortschreiten stets in Kausalrichtung wieder zum jeweiligen Ausgangsknoten zurück zu gelangen.

Bleiben unerkannte Zyklen bestehen, so ist dies, abgesehen von den unrichtigen Zuordnungen, für die Berechnung der Zutreffenswahrscheinlichkeiten der Netzknoten ohne Bedeutung. Dies wird im Vorgriff auf die in Abschnitt D)II) dargestellte Berechnung des Kausalnetzes an einem Beispiel demonstriert.

Beispiel 3:

Gegeben sei ein Kausalnetz, das aus den Knoten H1,H2,H3 und E4 besteht, wobei E4 mit der Wahrscheinlichkeit $p(E4 \mid E4')$ vorliegt. Die Netzstruktur weise folgenden Zyklus auf:

Für die Berechnung des Netzes gilt das nachfolgende Gleichungssystem.

Hierbei bedeutet (exemplarisch):

$p(H1 \mid H1')$ Wahrscheinlichkeit des Vorliegens von H1 unter Berücksichtigung aller Ereignisse, die hierfür von Bedeutung sind.

$p(H1 \mid H2'H3')$ Wahrscheinlichkeit von H1 unter der Bedingung des unsicher bestimmten Vorliegens von $H2'$ und $H3'$, deren Zutreffenswahrscheinlichkeiten die Werte $0 \leqq p(H2 \mid H2'), p(H3 \mid H3') \leqq 1$ besitzen.

$$p(H1 \mid H1') = p(H1 \mid H2' H3')$$

$$= \frac{p(H1\,H2\,H3'),\ \dfrac{p(H2 \mid H2')}{p(H2)} \cdot \dfrac{p(H3 \mid H3')}{p(H3)}}{p(H2\,H3') \cdot \dfrac{p(H2 \mid H2')}{p(H2)} \cdot \dfrac{p(H3 \mid H3')}{p(H3)}} \quad - - -$$

$$\frac{+\ p(H1\,H2\,\overline{H3'}) \cdot \dfrac{p(H2 \mid H2')}{p(H2)} \cdot \dfrac{p(\overline{H3} \mid H3')}{p(\overline{H3})}}{+\ p(H2\,\overline{H3'}) \cdot \dfrac{p(H2 \mid H2')}{p(H2)} \cdot \dfrac{p(\overline{H3} \mid H3')}{p(\overline{H3})}} \quad - - -$$

$$\frac{+\,p(H1\,\overline{H2}\,H3') \cdot \dfrac{p(\overline{H2} \mid H2')}{p(\overline{H2})} \cdot \dfrac{p(H3 \mid H3')}{p(H3)}}{+\,p(\overline{H2}\,H3') \cdot \dfrac{p(\overline{H2} \mid H2')}{p(\overline{H2})} \cdot \dfrac{p(H3 \mid H3')}{p(H3)}} \quad - - -$$

$$\frac{+\,p(H1\,\overline{H2}\,\overline{H3'}) \cdot \dfrac{p(\overline{H2} \mid H2')}{p(\overline{H2})} \cdot \dfrac{p(\overline{H3} \mid H3')}{p(\overline{H3})}}{+\,p(\overline{H2}\,\overline{H3'}) \cdot \dfrac{p(\overline{H2} \mid H2')}{p(\overline{H2})} \cdot \dfrac{p(\overline{H3} \mid H3')}{p(\overline{H3})}} \quad \cdot$$

$$p(H2 \mid H2') = p(H2 \mid H1'\,H3') = \text{(analog wie oben)}$$
$$p(H3 \mid H3') = p(H3 \mid H1'\,H2'\,E4') = \text{(analog wie oben)}.$$

Trotz fehlerhafter Zuweisung lassen sich die drei Gleichungen korrekt nach den drei Unbekannten $p(H_\mu \mid H_\mu')$, $\mu = 1,2,3$ auflösen.

## d) Darstellung des L-Netzes

Die graphische Darstellung eines L-Netzes läßt sich trotz des Ebenen-Ordnungsprinzps bei einer größeren Knotenanzahl nur dann überblicken, wenn nicht alle Aufbau-Schritte graphisch nachvollzogen werden. Es sollen deshalb nur die Aufbau-Schritte 1 und 2 im Bild dargestellt werden, die dann auf Anforderung durch weitere Aufbau-Schritte, unter Umständen nur für einen lokalen Netzausschnitt, ergänzt werden.

Falls es also die Netzausdehnung zuläßt, oder falls eine Beschränkung auf einen Teil des Netzes erfolgt, kann als nächstes auch der Aufbau-Schritt 3 dargestellt werden, wobei zu beachten ist:

Ist $N_{\lambda_0}$ ein beliebiger Knoten mit einer L-Verbindung, und ist URS($N_{\lambda_0}$) die Menge der Ursachen von $N_{\lambda_0}$, so ist es vorteilhaft, wenn alle von URS($N_{\lambda_0}$) verursachten E-Knoten auf der entsprechenden E-Teilebene so dargestellt werden, daß ihre Zusammengehörigkeit erkennbar ist.

Die Darstellungsproblematik wird an einem Beispiel verdeutlicht.

Beispiel 4:

Beispiel eines L-Netzes, das unter Beachtung der Begrenzungsvorschriften 1,2 und 3 aufgebaut wurde, wobei die Anzahl der H-Knoten in einer auf den L-Knoten führenden Kausalkette auf k: = 3 begrenzt ist.

Alle Aufbau-Schritte sind dargestellt.

Abb. 5:

Beispiel eines L-Netzes nach Begrenzungsvorschrift 1,2,3 Es bedeuten:

◨ nicht direkt meßbarer Knoten.

□ direkt meßbarer Knoten.

↘ Kausalverweis.

⤴ Abschluß eines wegführenden Kausalverweises.

⤵ Abschluß eines hinführenden Kausalverweises.

H9 Typ und Nummer des Netzknotens.

Von unten nach oben führende Kausalverweise (z.B. die Verbindung von U22 nach H7), sowie Kausalverbindungen über mehrere Ebenen hinweg (z.B. die Verbindung von H10 nach E31) beeinträchtigen die Uebersichtlichkeit und rechtfertigen dadurch Darstellungs-Beschränkungen.

e) L/1-Netz als Sonderform

Von besonderer Bedeutung, vor allem für praktische Anwendungen, ist ein L-Netz, das folgenden Begrenzungsvorschriften genügt:

Begrenzungsvorschrift 4

Ein Knoten mit wegführenden Kausalverweisen ist entweder ein U-Knoten, oder er besitzt eine (u.U. auch leere) Menge unmittelbarer Ursachen, die alle U-Knoten sind.

Begrenzungsvorschrift 5

Der Netzaufbau wird über die Kausalverweise der U-Knoten nicht fortgesetzt. Kausalverweise von U-Knoten zu bereits im L-Netz vorhandenen Knoten werden genutzt.

Begrenzungsvorschrift 6

Die hinführenden Kausalverweise von E-Knoten, die keinen Knoten mit einer L-Verbindung als unmittelbare Ursache besitzen, werden am Pfeilanfang nur dann mit Netzknoten besetzt, falls diese Knoten bereits durch eine andere Legitimation im Netz vorhanden sind.

Unter Beachtung dieser Begrenzungsvorschriften erhält man ein Kausalnetz, das nur in der Ebene 1 Knoten vom Typ H enthalten kann. Die E-Teilebene der Ebene 1 enthält dann die zugehörigen, direkt meßbaren E-Knoten, während die darüber liegende Ebene 2 ausschließlich U-Knoten besitzt, die ebenfalls direkt meßbar sind. Jeder H-Knoten verfügt somit über unmittelbare Ursachen und unmittelbare Folgen, deren Zutreffenswahrscheinlichkeit stets direkt gemessen werden kann.

Beispiel 5:

Abb. 6:

Beispiel eines nach den Begrenzungsvorschriften 4,5 und 6 aufgebauten Kausalnetzes.

Man beachte:

- Die hinführenden Kausalverweise von H14 sind besetzt, da die Begrenzungsvorschrift 2 nicht angewendet wird.

- E21 weist eine nicht besetzte Kausalverbindung auf, da H14 kein Knoten mit einer L-Verbindung ist, und die Besetzung des Kausalverweises nur mit anderweitig legitimierten Netzknoten möglich ist.

An Beispiel 5 ist zu erkennen, daß die L-Verbindungen in dem nach den Begrenzungsvorschriften 4,5 und 6 aufgebau ten Netz höchstens einen H-Knoten enthalten. Deshalb wird definiert:

Definition· (L'1-Netz)

Ein nach den Begrenzungsvorschriften 4,5 und 6 aufgebautes Kausalnetz heißt L'1-Netz.

Günstige Anwendungsmöglichkeite des L/1-Netzes ergeben sich z.B. in der Medizin:
- Den H-Knoten der Ebene 1 werden die gesuchten pathologischen Zustände zugeordnet,
- die Knoten der E-Teilebene und der Ebene 0 enthalten die feststellbaren Merkmale solcher Systemzustände,
- die U-Knoten der Ebene 2 repräsentieren die Ursachen, deren Zutreffenswahrscheinlichkeit ebenfalls direkt feststellbar sein soll.

Man erhält so die Möglichkeit, in einem relativ einfachen Modell die Wahrscheinlichkeit pathologischer Zustände mathematisch korrekt zu berechnen, wobei alle Einflüsse berücksichtigt werden können, die hierfür von Bedeutung sind. Die Anzahl der H-Knoten, und damit die Anzahl der Unbekannten in dem zu berechnenden Gleichungssystem, bleibt klein; die Stichproben zur Ermittlung der benötigten Verbundwahrscheinlichkeiten können, wie in Abschnitt D)III) näher erläutert wird, verhältnismäßig problemlos gewonnen werden.

II) Berechnung des L-Netzes

1) Wertungsumgebung WERT($H_{u0}$)

Für einen beliebigen H- Knoten $H_{u0}$ des L-Netzes kann eine Menge von Netzknoten angegeben werden, die für die Zutreffenswahrscheinlichkeit von $H_{u0}$ von Bedeutung sind, während andere, im allgemeinen weiter von $H_{u0}$ entfernte Knoten, keinen Einfluß mehr ausüben. Für beliebiges $H_{u0}$ bestimmen die folgenden Mengen den Wert von $p(H_{u0}|H_{u0}')$:
1. die Menge URS($H_{u0}$) der unmittelbaren Ursachen von $H_{u0}$
2. die Menge FOL($H_{u0}$) der unmittelbaren Folgen von $H_{u0}$
3. die Menge der Netzknoten, die unmittelbare Ursache für Elemente aus FOL($H_{u0}$) sind.

Damit wird definiert:

WERT($H_{u0}$) := Vereinigung der Mengen gem. 1.,2. und 3.

Beispiel 6:

Abb.7:

Beispiel einer Wertungsumgebung WERT($H_{\mu_0}$) für $H_{\mu_0}$ := H6. Kausalverweise zu Knoten außerhalb von WERT(H6) sind nur angedeutet.

Für den Knoten H6 besteht WERT(H6) aus den Mengen

1. URS(H6):= { H1, U2 },
2. FOL(H6):= { E9, E10, E11, E12, U13, H14 },
3. sowie der Menge { H3, U4, H5, H7, U8 }, die solche Netzknoten enthält, die zusätzlich zu H6 die Elemente aus FOL(H6) verursachen können.

2) Wertungsverbund W($H_{\mu_0}$)

Für beliebiges $H_{\mu_0}$ werden die Elemente aus WERT($H_{\mu_0}$) zu einem Verbund zusammengestellt. Dann werden folgende Maßnahmen durchgeführt:
- alle nicht direkt meßbaren Netzknoten werden mit einer ′ -Kennung versehen,
- alle direkt meßbaren Netzknoten werden im Falle des unsicheren Vorliegens ebenfalls mit einer ′ -Kennung, im Falle des sicheren Nicht-Vorliegens mit einer — -Kennung ausgestattet,
- alle direkt meßbaren Knoten mit unbekannter Zutreffenswahrscheinlichkeit werden entfernt,
- alle Knoten $N_\lambda$, die Ursachen für Elemente aus FOL($H_{\mu_0}$) sind, werden dann entfernt, falls die Elemente aus dem jeweiligen Durchschnitt FOL($N_\lambda$) ∩ WERT($H_{\mu_0}$) alle die Zutreffenswahrscheinlichkeit Null aufweisen.

Beispiel 7:

In Beispiel 4 ist

$$\text{WERT(H21)} := \Big\{ \underbrace{\text{H9}}_{\text{URS(H21)}}, \underbrace{\text{E28, E29, E30, L34}}_{\text{FOL(H21)}}, \underbrace{\text{H20, U22, U23, H24}}_{\text{Ursachen von FOL(H21)}} \Big\} .$$

· Es sei
p(E28|E28′) := 1,
p(E29|E29′) := 0.9,
p(E30|E30′) := 0,
p(L34|L34′) := 1,
p(U22|U22′) := 0.1,
p(U23|U23′) := unbekannt.

Mit diesen Werten gilt für den Wertungsverbund W(H21):

W(H21) := (H9′ E28 E29′ $\overline{\text{E30}}$ L34 H20′ U22′).

U23 wird in W(H21) nicht berücksichtigt, da der Wert für p(U23|U23′) nicht bekannt ist.
H24 entfällt, da FOL(H24)∩WERT(H21) := {E30} gilt, und mit p(E30|E30′) := 0 die Zutreffenswahrscheinlichkeiten aller Elemente dieses Durchschnitts Null sind.

3) Aufstellung der Wertungsgleichungen

Mit Hilfe der Wertungsverbunde, die für jeden H-Knoten eines L-Netzes zu bilden sind, werden die sogennanten Wertungsgleichungen aufgestellt.

Seien hierzu die Zutreffenswahrscheinlichkeiten beliebig vieler direkt meßbarer Knoten eines beliebigen L-Netzes bekannt. Für jeden im L-Netz enthaltenen H-Knoten $H_\mu$, $\mu$ := 1,...,m, werden die Wertungsverbunde W($H_\mu$) gebildet, so daß die m Wertungsgleichungen

$p(H_\mu | H_\mu^{\prime}) = p(H_\mu | W(H_\mu))$, $\mu$ := 1,...,m

unmittelbar formuliert werden können.

Auf die Wertungsgleichungen wird jeweils der L-Satz angewendet. Enthält das L-Netz m H-Knoten, so erhält man ein System von m Gleichungen in den m Unbekannten $p(H_\mu | H_\mu^{\prime})$. Für beliebiges $H_{\mu_0}$ besitzt dabei die Gleichung

$p(H_{\mu_0} | H_{\mu_0}^{\prime}) = p(H_{\mu_0} | W(H_{\mu_0}))$

auf der rechten Seite so viele Unbekannte, wie $W(H_{\mu 0})$ H-Knoten enthält, und so viele zusätzliche markierte Netzknoten, wie $W(H_{\mu 0})$ Elemente mit unsicher bestimmter Zutreffenswahrscheinlichkeit aufweist. Die Lösung des Gleichungssystems kann nach den üblichen Verfahren erfolgen.

Beispiel 8

Gegeben sei ein Kausalnetz, das die folgende Struktur besitzt:

H1 ▣
↓
H2 ▣
↓
E3 ▢

Die Zutreffenswahrscheinlichkeit von E3 sei unbekannt. Dann gilt:

$p(H1|H1') = p(H1|W(H1))$
$= p(H1|H2')$
$= p(H1|H2) \cdot p(H2|H2') + p(H1|\overline{H2}) \cdot p(\overline{H2}|H2')$.
$p(H2|H2') = p(H2|W(H2))$
$= p(H2|H1')$
$= p(H2|H1) \cdot p(H1|H1') + p(H2|\overline{H1}) \cdot p(\overline{H1}|H1')$.

Aus den zwei Gleichungen mit den zwei Unbekannten $p(H1|H1')$ und $p(H2|H2')$ ergibt sich:

$$p(H1|H1') = \frac{p(H1|\overline{H2}) + p(H2|\overline{H1}) \cdot \left[p(H1|H2) - p(H1|\overline{H2})\right]}{1 - \left[p(H2|H1) - p(H2|\overline{H1})\right] \cdot \left[p(H1|H2) - p(H1|\overline{H2})\right]},$$

$$p(H2|H2') = \frac{p(H2|\overline{H1}) + p(H1|\overline{H2}) \cdot \left[p(H2|H1) - p(H2|\overline{H1})\right]}{1 - \left[p(H2|H1) - p(H2|\overline{H1})\right] \cdot \left[p(H1|H2) - p(H1|\overline{H2})\right]}.$$

Zur Demonstration etwas schwierigerer Verhältnisse wird ein weiteres Beispiel angegeben.

Beispiel 9

Gegeben sei ein Kausalnetz der folgenden Struktur:

U5 ▢        H2 ▣

H1 ▣                H3 ▣

H4 ▣
↓
E6 ▢

Es sei $p(U5|U5') := 0.7$ und $p(E6|E6') := 1$. Dann gilt:

$p(H1|H1') = p(H1|U5'\ H2'\ H4'\ H3')$,

$p(H2|H2') = p(H2|H1'\ H3'\ U5')$,

$p(H3|H3') = p(H3|H2'\ H4'\ H1')$,

$p(H4|H4') = p(H4|H1'\ H3'\ E6)$.

Wendet man jeweils den L-Satz an, so ergibt dies vier Gleichungen in den vier Unbekannten $p(H_\mu|H_\mu')$, $\mu := 1,...,4$.

Die Anwendung des L-Satzes wird für $p(H4|H4')$ exemplarisch angegeben:

$$p(H4|H4') = p(H4|H1'\ H3'\ E6)$$

$$= \frac{p(H4\ H1\ H3\ E6)\cdot\dfrac{p(H1|H1')}{p(H1)}\cdot\dfrac{p(H3|H3')}{p(H3)}}{p(H1\ H3\ E6)\cdot\dfrac{p(H1|H1')}{p(H1)}\cdot\dfrac{p(H3|H3')}{p(H3)}}\ \cdots$$

$$+ \frac{p(H4\ H1\ \overline{H3}\ E6)\cdot\dfrac{p(H1|H1')}{p(H1)}\cdot\dfrac{p(\overline{H3}|H3')}{p(\overline{H3})}}{p(H1\ \overline{H3}\ E6)\cdot\dfrac{p(H1|H1')}{p(H1)}\cdot\dfrac{p(\overline{H3}|H3')}{p(\overline{H3})}}\ \cdots$$

$$+ \frac{p(H4\ \overline{H1}\ H3\ E6)\cdot\dfrac{p(\overline{H1}|H1')}{p(\overline{H1})}\cdot\dfrac{p(H3|H3')}{p(H3)}}{p(\overline{H1}\ H3\ E6)\cdot\dfrac{p(\overline{H1}|H1')}{p(\overline{H1})}\cdot\dfrac{p(H3|H3')}{p(H3)}}\ \cdots$$

$$+ \frac{p(H4\ \overline{H1}\ \overline{H3}\ E6)\cdot\dfrac{p(\overline{H1}|H1')}{p(\overline{H1})}\cdot\dfrac{p(\overline{H3}|H3')}{p(\overline{H3})}}{p(\overline{H1}\ \overline{H3}\ E6)\cdot\dfrac{p(\overline{H1}|H1')}{p(\overline{H1})}\cdot\dfrac{p(\overline{H3}|H3')}{p(\overline{H3})}}\ .$$

Nach dem gängigen Einstzverfahren, das bei vier Unbekannten noch praktikabel ist, können die Lösungen des Gleichungssystems wie folgt ermittelt werden:

Nummeriert man die Wertungsgleichungen des Beispiels 9 in der Reihenfolge ihres Auftretens, und setzt man Gleichung 4 in die Gleichung 1 ein, so ergibt dies eine Gleichung, die in $p(H1|H1')$ quadratisch ist, und die $p(H4|H4')$ nicht mehr enthält. Durch nachfolgendes Einsetzen von Gleichung 4 in die Gleichung 3 und weiteres analoges Vorgehen, sind schließlich die Lösungen angebbar.

Bei einer größeren Anzahl von Unbekannten wird auf eine exakte Formulierung der Lösung verzichtet; stattdessen werden die bewährten Methoden der numerischen Mathematik zur näherungsweisen Lösung von Gleichungssystemen angewendet.

Das Wissen über die Zutreffenswahrscheinlichkeit eines Ereignisses wird zunächst für die Netzknoten genutzt, zu deren Wertungsumgebungen dieses Ereignis gehört. Da solche Netzknoten wiederum selbst

Elemente in den Wertungsumgebungen weiterer Netzknoten sind, erhält man dann eine Propagierung von Wissen durch das Kausalnetz. Verändert sich die Zutreffenswahrscheinlichkeit eines Ereignisses an einer beliebigen Stelle des Netzes, so wird durch die Änderung der Wertungsgleichungen dieses Wissen so weit im Netz fortgepflanzt, wie die Kriterien für die Erstellung der Wertungsumgebungen dies erfordern

### 4) Vereinfachung der Wertungsgleichungen

a) An Beispiel 9 ist unmittelbar zu erkennen, daß sich die Berechnungen vereinfachen, wenn für die Zutreffenswahrscheinlichkeiten der direkt meßbaren Netzknoten nur Werte aus $\{0, 1\}$ zugelassen werden. Obwohl unsicher bestimmte E- oder U-Knoten zugelassen sind, so ist doch im Hinblick auf auf die Vereinfachung des Berechnungsverfahrens und die Verringerung des Ergebnisfehlers möglichst zu fordern, daß das Vorliegen oder Nicht-Vorliegen direkt meßbarer Netzknoten entweder mit Sicherheit bestimmt, oder als unbekannt eingestuft wird.

b) Für einen beliebigen Knoten $H_{u0}$, der kein Knoten mit einer L-Verbindung ist, kann $p(H_{u0}|H_{u}{}') := 0$ gesetzt werden, falls alle von $H_{u0}$ verursachten E- oder U-Knoten die Zutreffenswahrscheinlichkeit Null aufweisen.

c) Für einen beliebigen Knoten $H_{u0}$ und einen beliebigen E- oder U-Knoten $H\lambda_0$ aus $FOL(H_{u0})$ gilt:
Ist $p(N_{\lambda 0}|N_{\lambda}{}') \approx 0$ und

$$\frac{p(H_{\mu_o} | N_{\lambda_o})}{p(H_{\mu_o})} \approx 1 ,$$

so können aus $W(H_{u0})$ alle Knoten entfernt werden, die nur aufgrund der Eigenschaft, daß sie eine mögliche Ursache für den Knoten $N_0$ sind, in dem Wertungsverbund von $H_{u0}$ erscheinen.

### III) Aufbau und Auswertung der Stichproben

### 1) Anforderungen an die Struktur des L-Netzes

Zur Berechnung des L-Netzes werden Verbundwahrscheinlichkeiten benötigt, deren Näherungen als relative Häufigkeiten aus Stichproben gewonnen werden. Um eine schwierig zu erstellende Stichprobe auf der zugrunde gelegten Gesamtpopulation zu vermeiden, fordert man eine bestimmte, leicht zu erfüllende Struktur des L-Netzes, so daß bedingte Stichproben, d.h. Stichproben auf Subpopulationen möglich werden. Die an das L-Netz zu stellende Strukturforderung wird an einem Beispiel unmittelbar erläutert.

### Beispiel 10

In Beispiel 4 gilt für den Knoten H7:
WERT(H7) := $\{H1, U22, U18, H20, E14, E15, H9\}$.
Nimmt man an, daß das Vorliegen der direkt meßbaren Knoten mit Sicherheit bestimmt ist, dann gilt:

$$p(H7 | H7{}') = p(H7 | H1{}'\ U22\ U18\ H20{}'\ E14\ E15\ H9{}')$$

$$= \frac{\underset{H1\ H20\ H9}{L}\left[ p(H7\ H1\ U22\ U18\ H20\ E14\ E15\ H9) \right]}{\underset{H1\ H20\ H9}{L}\left[ p(H1\ U22\ U18\ H20\ E14\ E15\ H9) \right]} .$$

Die für die Berechnung von p(H7|H7$'$) benötigten Verbundwahrscheinlichkeiten haben also die in der obigen Gleichung angegebene Gestalt, wobei diejenigen Netzknoten auch negiert auftreten können, die in W(H7) eine $'$-Kennung aufweisen. Stellt man sicher, daß wenigstens eines der Elemente aus {U22, U18, E14, E15} der direkt meßbaren Knoten immer mit Sicherheit vorliegt, wenn p(H7|H7$'$) > 0 gilt, dann können die Verbundwahrscheinlichkeiten der obigen Gleichung durch bedingte Wahrscheinlichkeiten ersetzt werden, wobei das bei p(H7|H7$'$) > 0 mit Sicherheit vorliegende Element die Bedingung angibt.

Ist etwa E14 der Netzknoten, dessen sicheres Vorliegen für p(H7|H7$'$) > 0 gefordert wird, so stehen im Zähler und Nenner der obigen Gleichung die bedingten Wahrscheinlichkeiten p(H7 H1 U22 U18 H20 E15 H9|E14) bzw. p(H1 U22 U18 H20 E15 H9|E14), wobei mit Ausnahme von E14 wieder beliebig viele Elemente auch negiert auftreten können.

Die Darlegungen von Beispiel 10 führen zu folgender, an die Struktur des L-Netzes zu stellender Forderung:

Strukturforderung

Für einen beliebigen H-Knote $H_{\mu 0}$ und für $p(H_{\mu 0}|H\mu_0^{\;'})$ > 0 ist zu fordern, daß wenigstens einer der direkt meßbaren Knoten aus WERT($H_{\mu 0}$) mit Sicherheit vorliegt.

2) Aufbau der Stichproben

Für einen beliebigen H-Knoten $H_{\mu 0}$, der i drekt meßbare Knoten in seiner Wertungsumgebung WERT-($H_{\mu 0}$) besitzt, werden i Stichproben erstellt, jeweils unter der Bedingung des Vorliegens eines der direkt meßbaren Elemente aus WERT($H_{\mu 0}$). Die Ausführungen einer jeden dieser i Stichproben enthalten Angaben über die Zutreffenswahrscheinlichkeiten aller Elemente aus WERT($H_{\mu 0}$) ∪ {$H_{\mu 0}$}.

Dies wird für alle H-Knoten des L-Netzes durchgeführt, mit folgenden Ausnahmen:

- Für die H-Knoten aus URS(L) ist es günstig, die sichere Existenz des L-Knotens dadurch zu nutzen, indem man jeweils nur eine Stichprobe erstellt, nämlich eine Stichprobe unter der Bedingung des Vorliegens des Leitsymptoms.

- Unter der Voraussetzung, daß die Zutreffenswahrscheinlichkeiten der direkt meßbaren Knoten des L-Netzes nur Werte aus {0, 1} annehmen, und daß das L-Netz nach den Begrenzungsvorschriften 1.2.3 oder 4.5.6 erstellt ist, gilt:

$H_{\mu'}$ sei ein beliebiger Knoten mit L-Verbindung,

$H_{\mu 0}$ sei ein Knoten, der nur deshalb im Netz erscheint, weil FOL($H_{\mu 0}$) ∩ FOL($H_{\mu'}$) ≠ {∅} ist.

Da $H_{\mu 0}$ nur dann im Gleichungssystem vorkommt, wenn eines der Elemente aus FOL($H_{\mu 0}$) ∩FOL ($H_{\mu'}$) vorliegt, genügen für $H_{\mu 0}$ Stichproben unter der Bedingung des Vorliegens jeweils eines der Elemente aus FOL($H_{\mu 0}$) ∩ FOL($H_{\mu'}$).

Die Beschaffenheit einer Stichprobe wird an einem Beispiel vorgeführt.

Beispiel 11

In Beispiel 10 war

WERT(H7): = {H1, U22, U18, H20, E14, E15, H9}

mit den direkt meßbaren Elementen U22, U18, E14 und E15. Für H7 werden somit vier Stichproben erstellt, jeweils unter der Bedingung des Vorliegens eines dieser direkt meßbaren Elemente. Jede Stichprobenausführung enthält dann Angaben über die Zutreffenswahrscheinlichkeiten aller Elemente aus WERT(H7) ∪ {H7}.

Dies wird exemplarisch für die Stichprobe auf der Subpopulation mit der Eigenschaft U18 vorgeführt.

| Zutreffendes Ereignis: U18 | | | | |
|---|---|---|---|---|
| WERT(H7) ∪ {H7} | Ausführungen | | | |
| | 1 | 2 | 3 | 4 |
| H1 | 1 | .9 + .05 | 1 | .7 + .20 |
| U22 | 1 | 1 | .8 + .10 | 0 |
| U18 | - | - | - | - |
| H20 | 0 | 1 | 0 | 0 |
| E14 | .1 + .05 | 0 | .2 + .10 | 1 |
| E15 | .1 + .05 | 1 | 1 | .9 + .10 |
| H9 | 1 | 0 | 0 | 1 |
| H7 | 0 | 1 | .9 + .10 | 1 |
| Abb. 8: | | | | |

Stichprobe für H7, erstellt unter der Bedingung des Vorliegens von U18.

Die in den Spalten von Abb. 8 eingetragenen Zahlenwerte geben den Wert der Wahrscheinlichkeit, mit der ein Netzknoten bei der entsprechenden Stichprobenausführung vorliegt; zusätzlich ist für Werte $\notin$ {0, 1} ein absoluter Fehler angegeben, der für eine Fehlerrechnung eingesetzt werden kann. Die genaue Bezeichnung eines Spaltenwerts für einen beliebigen Netzknoten $H_{\lambda_0}$ lautet:

$$h(N_{\lambda_0}|N_\lambda \overset{!}{\circ}) \xi \pm \Delta h(N_{\lambda_0}|N_\lambda \overset{!}{\circ})\xi ,$$

wobei h die relative Häufigkeit ist, und $\xi$ die entsprechende Stichprobenausführung bezeichnet.

Um mit Hilfe der in Abschnitt IV) dargestellten Selbstständigkeits-Analyse die eigentlichen Ursachen des Leitsymptoms zu ermitteln, ist eine weitere Stichprobe erforderlich. Diese Stichprobe wird ohne Bedingung erhoben und enthält Angaben über die Zutreffenswahrscheinlichkeiten aller Elemente aus URS-(L) ∪ {L}.

Für zusätzliche Selbstständigkeits-Analysen, wenn die eigentlichen Ursachen für weitere Knoten $N_\lambda$ des L-Netzes ermittelt werden, sind dann entsprechende Stichproben erforderlich, die jeweils Angaben über die Zutreffenswahrscheinlichkeiten aller Elemente aus URS($N_\lambda$) ∪ {$N_\lambda$} enthalten.

3) Auswertung der Stichproben

a) Formelzusammenstellung

Zur Auswertung der Stichproben stehen eine Reihe bewährter Formeln zur Verfügung, deren Bezeichnungsweise beibehalten wird. Es bezeichnen:

$H_j$ den Netzknoten, dessen Vorliegen als Bedingung bei der Erhebung der Stichprobe gefordert ist,

$E_1,..,E_i,..,E_k$ beliebige Netzknoten,

$\xi$ die Stichproben-ausführung,

n die Anzahl der Stichproben-Ausführungen,

$n(H_j)$ die Anzahl der Stichproben-Ausführungen bei Vorliegen von $H_j$.

Damit gilt:

$$h(E_k | H_j) = \frac{\sum_{\xi=1}^{n} h(E_k | E_k^!)_\xi}{n}, \quad E_k \text{ beliebig},$$

Ausführung $\xi$ besitzt

die Eigenschaft $H_j$.

$$h(E_i \ldots E_k | H_j) = \frac{\sum_{\xi=1}^{m} \left[ h(E_i | E_i^!)_\xi \cdot \ldots \cdot h(E_k | E_k^!)_\xi \right]}{n},$$

$(E_i \ldots E_k)$ beliebig,

Ausführung $\xi$ besitzt die Eigenschaft $H_j$.

$$\Delta h(E_k | H_j) \approx \sqrt{\left[ \Delta h_u(E_k | H_j) \right]^2 + \left[ \Delta h_B(E_k | H_j) \right]^2},$$

wobei gilt:

$$\Delta h_u(E_k | H_j) \approx \frac{1}{n(H_j)} \cdot \sqrt{\sum_{\xi=1}^{n(H_j)} \left[ \Delta h(E_k | E_k^!)_\xi \right]^2},$$

Ausführung $\xi$ besitzt die Eigenschaft $H_j$,

$$\Delta h_B(E_k \mid H_j) \approx \sqrt{\frac{1}{n(H_j)} \cdot h(E_k \mid H_j) \cdot \left[1 - h(E_k \mid H_j)\right]} \cdot$$

$$\Delta h(E_k \ldots E_1 \mid H_j) \approx \sqrt{\left(\frac{\partial h(E_k \ldots E_1 \mid H_j)}{\partial h(E_k \mid H_j)} \cdot \Delta h(E_k \mid H_j)\right)^2 + \cdots}$$

$$\cdots + \left(\frac{\partial h(E_k \ldots E_1 \mid H_j)}{\partial h(E_1 \mid H_j)} \cdot \Delta h(E_1 \mid H_j)\right)^2 \quad ,$$

wobei gilt:

$$\frac{\partial h(E_k \ldots E_i \ldots E_1 \mid H_j)}{\partial h(E_i \mid H_j)} := \max\left\{ \left| \frac{\partial h(E_k \ldots E_i \ldots E_1 \mid H_j)}{\partial h(E_i \mid H_j)_+} \right| , \left| \frac{\partial h(E_k \ldots E_i \ldots E_1 \mid H_j)}{\partial h(E_i \mid H_j)_-} \right| \right\} ;$$

$$\frac{\partial h(E_k \ldots E_i \ldots E_1 \mid H_j)}{\partial h(E_i \mid H_j)_+} := \frac{h(E_k \ldots \overline{E_i} \ldots E_1 \mid H_j)}{h(\overline{E_i} \mid H_j)} \quad ,$$

$$\frac{\partial h(E_k \ldots E_i \ldots E_1 \mid H_j)}{\partial h(E_i \mid H_j)_-} := \frac{h(E_k \ldots E_i \ldots E_1 \mid H_j)}{h(E_i \mid H_j)} \quad ,$$

$$\frac{\partial h(E_k \ldots \overline{E_i} \ldots E_1 \mid H_j)}{\partial h(E_i \mid H_j)_+} := - \frac{h(E_k \ldots \overline{E_i} \ldots E_1 \mid H_j)}{h(\overline{E_i} \mid H_j)} \quad ,$$

$$\frac{\partial h(E_k \ldots \overline{E_i} \ldots E_1 \mid H_j)}{\partial h(E_i \mid H_j)_-} := - \frac{h(E_k \ldots E_i \ldots E_1 \mid H_j)}{h(E_i \mid H_j)} \quad .$$

b) Berechnungsbeispiel

In Beispiel 11 gilt:

$$h(H1 \mid U18) = \frac{1 + 0.9 + 1 + 0.7}{4} = \frac{3.6}{4} = 0.9 \,.$$

$$h(\overline{H1} \mid U18) = \frac{0 + 0.1 + 0 + 0.3}{4} = \frac{0.4}{4} = 0.1 \,.$$

$$h(H1 \; U22 \mid U18) = \frac{1 \cdot 1 + 0.9 \cdot 1 + 1 \cdot 0.8 + 0.7 \cdot 0}{4} = 0.675 \,.$$

$$h(\overline{H1} \; U22 \mid U18) = \frac{0 \cdot 1 + 0.1 \cdot 1 + 0 \cdot 0.8 + 0.3 \cdot 0}{4} = 0.025 \,.$$

$$\Delta h_{u}(H1 \mid U18) \approx \frac{\sqrt{0 + 0.05^{2} + 0 + 0.2^{2}}}{4} = 0.052 \,.$$

$$\Delta h_{B}(H1 \mid U18) \approx \sqrt{\frac{1}{4} \cdot 0.9 \; 0.1} = 0.15 \,.$$

$$\Delta h(H1 \mid U18) \approx \sqrt{0.05^{2} + 0.15^{2}} = 0.158 \,.$$

$\Delta h(U22|U18)$ wird analog berechnet. Zur Bestimmung von $\Delta h(H1 \; U22|U18)$ fehlen noch die Ausdrücke der Form

$$\frac{\partial h(H1 \; U22 \mid U18)}{\partial h(H1 \mid U18)} \quad \text{und} \quad \frac{\partial h(H1 \; U22 \mid U18)}{\partial h(U22 \mid U18)} \,.$$

Eine Berechnung wird für den ersten Ausdruck vorgeführt. Es ist:

$$\frac{\partial h(H1 \; U22 \mid U18)}{\partial h(H1 \mid U18)_{+}} = \frac{h(\overline{H1} \; U22 \mid U18)}{h(\overline{H1} \mid U18)} = \frac{0.025}{0.1} = 0.25 \,,$$

$$\frac{\partial h(H1 \; U22 \mid U18)}{\partial h(H1 \mid U18)_{-}} = \frac{h(H1 \; U22 \mid U18)}{h(H1 \mid U18)} = \frac{0.675}{0.9} = 0.75 \,.$$

Damit ist:

$$\frac{\partial \, h \langle H1 \ U22 \mid U18 \rangle}{\partial \, h \langle H1 \mid U18 \rangle} := \max \left\{ \mid 0.25 \mid , \mid 0.75 \mid \right\} \qquad = 0.75 .$$

## IV) Selbstständigkeits-Analyse und Bildung von Kausalketten

### 1) Selbstständigkeits-Analyse

#### a) Vorbemerkungen

Die Berechnung des L-Netzes ergibt für jeden H-Knoten die Wahrscheinlichkeit seines Zutreffens, wobei alle Ereignisse berücksichtigt sind, die auf diese Wahrscheinlichkeit einen Einfluß ausüben. Gesucht sind nun diejenigen Knoten bzw. diejenigen Verbunde von Knoten aus URS(L), die "selbstständig", d.h. ohne gegenseitige Beeinflussung, den Leitsymptom-Knoten verursachen. Ist dann V ein solcher Verbund aus im allgemeinen '-markierten Netzknoten, so ist $p(L|V)$ die Wahrscheinlichkeit, mit der V den Knoten L verursacht.

Im einzelnen:

Weist das L-Netz einen Knoten N1 als einzige Ursache für L aus, so ist $p(L|N1)$ die Wahrscheinlichkeit, daß N1 das Ereignis L verursacht. Weist das L-Netz die beiden Netsknoten N1 und N2 als einzige Ursachen von L aus, so ist selbstverständlich ebenso $p(L|N1 \ N2)$ die Wahrscheinlichkeit, daß der Verbund (N1 N2) das Ereignis L verursacht; hier besteht jedoch die Möglichkeit, daß N1 und N2 jeweils "selbstständig", d.h. ohne sich gegenseitig zu beeinflussen, den Knoten L verursachen. In diesem Fall sind dann $p(L|N1 \ \overline{N2})$ und $p(L| \overline{N1} \ N2)$ die Wahrscheinlichkeiten, mit denen N1 bzw. N2 das Ereignis L verursachen.

Um solche Möglichkeiten aufzudecken, wird die nachfolgend beschriebene Selbstständigkeits-Analyse durchgeführt.

#### b) Fundierung der Selbstständigkeits-Analyse

#### Modell-Annahme 1

Es wird angenommen, daß durch die Entstehung des Ereignisses L aus einer beliebigen Ursache, die Entstehung eben dieses Ereignisses L aus einer anderen Ursache allenfalls gefördert, jedoch nicht behindert wird.

#### Definition

#### (Netzknoten als potentiell selbstständige Ursache)

Zwei beliebige Netzknoten N1 und N2 aus URS(L) heißen potentiell selbstständige Ursachen von L, falls
$$p(L|N1 \ N2 \ R(N1 \ N2)) \leqq p(L|N1 \ R(N1)) + p(L|N2 \ R(N2)) - [p(L|N1 \ R(N1)) \cdot p(L|N2 \ R(N2))]$$
gilt, anderfalls heißt (N1 N2) potentiell selbstständige Ursache von L.

Hierbei bedeutet R(N1 N2):

Rest-Verbund, bestehend aus allen negierten Elementen von URS(L) mit Ausnahme von N1 und N2. ( Entsprechendes gilt für R(N1) und R(N2) ).

#### Beispiel 12

In Beispiel 4 ist URS(L) := {H20, H21, U22, U23}. Zwei beliebige Elemente aus URS(L), etwa H20 und U23 heißen potentiell selbstständige Ursachen von L, falls gilt:

$p(L|H20 \ U23 \ \overline{H21 \ U22}) \leq p(L|H20 \ \overline{H21 \ U22 \ U23}) + p(L|U23 \ \overline{H20 \ H21 \ U22}) - [p(L|H20 \ \overline{H21 \ U22 \ U23}) \cdot p-(L|U23 \ \overline{H20 \ H21 \ U22}]$ ,

andernfalls heißt (H20 U23) potentiell selbstständige Ursache von L.


## Definition

### (Verbunde als potentiell selbstständige Ursachen)

$(N_1 \dots N_l)$ sei ein Verbund von beliebig vielen Netzknoten aus URS(L).

$V_1, \dots, V_m$ sei eine vollständige Zerlegung des Verbundes $(N_1 \dots N_l)$ in nicht notwendigerweise elementfremde Netzknotenverbunde, wobei gilt:

- $V_1, \dots, V_m$ sind potentiell selbständige Ursachen von L,
- $V_a$ ist nicht vollständig enthalten in $V_b$ , für beliebige Verbunde $V_a, V_b \in \{V_1, \dots, V_m\}$.

Bezeichnet man mit $p_1 \dots, p_m$ die Wahrscheinlichkeiten $p(L|V_1 \ R(V_1)), \dots, p(L|V_m \ R(V_m))$. dann heißen unter Anwendung des Satzes von Poincaré-Sylvester die Verbunde $V_1, \dots, V_m$ potentiell selbstständige Ursachen, falls

$$p(L \mid N_1 \dots N_l \ R(N_1 \dots N_l)) \leq \sum_{i=1}^{m} p_i - \sum_{i<j} p_i p_j + \sum_{i<j<k} p_i p_j p_k - + \dots$$

gilt, andernfalls heißt $(N_1 \dots N_l)$ potentiell selbstständige Ursache von L.


## Definition (selbstständige Ursachen)

Enthält der Verbund $(N_1 \dots N_l)$ der obigen Definition (Verbunde als potentiell selbstständige Ursachen) alle Elemente aus URS(L), so heißen bei Erfüllung der in der obigen Definition angegebenen Ungleichung die Verbunde $V_1, \dots, V_m$ selbstständige Ursachen von L, anderfalls heißt $(N_1 \dots N_l)$ selbstständige Ursache von L.


## Modell-Annahme 2

Für selbstständige Ursachen von L wird angenommen, daß die Wahrscheinlichkeit der Entstehung des Ereignisses L aus einer selbstständigen Ursache nicht beeinflußt wird durch das Vorhandensein einer anderen selbstständigen Ursache.


## c) Vorgehensweise bei der Selbstständigkeits-Analyse

Die einzelnen Schritte zur Durchführung einer Selbstständigkeits-Analyse werden unmittelbar an einem Beispiel demonstriert.


## Beispiel 13

In Beispiel 12 ist URS(L) := {H20, H21, U22, U23}.


## Schritt 0

Alle Elemente aus URS(L) sind potentiell selbstständige Ursachen.

Schritt 1

Alle möglichen Verbunde mit 2 Elementen, also
(H20 H21), (H20 U22), (H20 U23),
(H21 U22), (H21 U23), (U22 U23)
werden analysiert. Dies ist in Beispiel 12 für (H20 U23) vorgeführt.

Potentiell selbstständige Ursachen, die vollständig in einer anderen potentiell selbstständigen Ursache enthalten sind, verlieren ihre Selbstständigkeits-Eigenschaft.

Schritt 2

Alle möglichen Verbunde mit 3 Elementen, also
(H20 H21 U22), (H20 H21 U23), (H20 U22 U23),
(H21 U22 U23),
werden analysiert. Dies wird exemplarisch für (H21 U22 U23) durchgeführt.

Der Verbund (H21 U22 U23) kann wie folgt zerlegt werden:
(H21) (U22) (U23), (H21 U22)(U22 U23),
(H21 U22)(U23), (H21 U23)(U22 U23),
(H21 U23)(U22), (H21 U22)(H21 U23),
(U22 U23)(H21), (H21 U22)(H21 U23)(U22 U23).

Da die Zerlegung jedoch aus potentiell selbstständigen Ursachen von L bestehen muß, und da keine potentiell selbstständige Ursache in einer anderen enthalten sein darf, verringern sich die Zerlegungsmöglichkeiten erheblich.

Zur Demonstration des weiteren Vorgehens gelte zunächst die 1. Möglichkeit. Mit
$p1 := p(L|H21\ \overline{U22\ U23\ H20})$,
$p2 := p(L|U22\ \overline{H21\ U23\ H20})$,
$p3 := p(L|U23\ \overline{H21\ U22\ U23})$ gilt:
falls
$p(L|H21\ U22\ U23\ \overline{H20}) \leqq p1 + p2 + p3 - p1{}^{\bullet}p2 - p1{}^{\bullet}p3 - p2{}^{\bullet}p3 + p1{}^{\bullet}p2{}^{\bullet}p3$
erfüllt ist, sind H21, U22 und U23 potentiell selbstständige Ursachen von L, anderfalls ist der Verbund (H21 U22 U23) eine potentiell selbstständige Ursache von L.

Ist dagegen die 2. Zerlegungsmöglichkeit gültig, so ist
$p1 := p(L|H21\ U22\ \overline{U23\ H20})$,
$p2 := p(L|U23\ \overline{H21\ U22\ H20})$.
Falls
$p(L|H21\ U22\ U23\ \overline{H20}) \leqq p1 + p2 - p1{}^{\bullet}p2$
erfüllt ist, sind (H21 U22) und U23 potentiell selbstständige Ursachen von L, andernfalls ist (H21 U22 U23) eine potentiell selbstständige Ursache von L.

So kann festgestellt werden, ob (H21 U22 U23), oder ob die Verbunde der jeweiligen Zerlegung potentiell selbstständig L verursachen.

Dieses Vorgehen wird auf alle Verbunde mit 3 Elementen angewendet. Potentiell selbstständige Ursachen, die vollständig in einer anderen potentiell selbstständigen Ursache enthalten sind, verlieren ihre Selbstständigkeitseigenschaft. Man erhält so alle potentiell selbstständigen Ursachen von L mit höchstens 3 Elementen je Verbund.

Schritt 3

Für alle Verbunde mit 4 Elementen, also für
(H20 H21 U22 U23),
werden mit Hilfe der bisher gewonnenen potentiellen Ursachen unter Beachtung der definierten Kriterien (Definition über Verbunde als potentiell selbstständige Ursachen) Zerlegungen durchgeführt. Für jede der gebildeten Zerlegungen wird festgestellt, ob der Vierer-Verbund, oder ob die Verbunde der jeweiligen Zerlegungen potentiell selbstständig L verursachen. Dabei wird beachtet, daß keine potentiell selbstständige Ursache existiert, die in einer solchen vollständig enthalten ist.

Schritt 4

Da der Vierer-Verbund (H20 H21 U22 U23) bereits alle Elemente von URS(L) enthält, sind die mit Schritt 3 ermittelten potentiell selbstständigen Ursachen die gesuchten selbstständigen Ursachen von L.

d) Sonderbestimmungen

— ·Enthält URS(L) eine große Anzahl von Elementen, so kann die Selbstständigkeits-Analyse vor dem Ende abgebrochen werden, wenn die bis dahin gefundenen potentiell selbstständigen Ursachen und die Gegebenheiten des L-Netzes die Annahme zulassen, daß ein Zusammengehen dieser gefundenen Ursachen zu Ursachenverbunden mit höherer Elementanzahl ausgeschlossen werden kann.
— Die Selbstständigkeits-Analyse läßt sich auch problemlos durchführen, wenn die Ursachen von L unsicher bestimmt vorliegen.

Beispiel 14:

In Beispiel 12 seien $H20'$ und $U23'$ beliebige, unsicher bestimmte Elemente aus URS(L). Ist die Ungleichung
$$p(L|H20' \, U23' \, \overline{H21 \, U22}) \leq p(L|H20' \, \overline{U23 \, H21 \, U22}) + p(L|U23' \, \overline{H20 \, H21 \, U22}) - [p(L|H20' \, \overline{U23 \, H21 \, U22} \, .p\text{-}(L|U23' \, \overline{H20 \, H21 \, U22})]$$
erfüllt, so sind $H20'$ und $U23'$ potentiell selbstständige Ursachen von L, andernfalls ist $(H20' \, U23')$ potentiell selbstständige Ursache von L.
— Für die Berechnungen stehen als Näherungen der benötigten Wahrscheinlichkeitswerte die entsprechenden relativen Häufigkeiten zur Verfügung. Um zu vermeiden, daß vor allem die Verbunde mit kleiner Elementanzahl durch unvermeidliche Stichproben-Ungenauigkeiten nicht als potentiell selbstständig zu erkennen sind, werden die mittleren absoluten Fehler der relativen Häufigkeiten auf der linken Seite der anzusetzenden Ungleichung subtrahiert, auf der rechten Seite addiert.

Beispiel 15

H20 und U23 seien beliebige Elemente aus
URS(L) : = {H20, H21, U22, U23}.
Ist die Ungleichung
$$h(L|H20 \, U23 \, \overline{H21 \, U22}) - \Delta h(L|H20 \, U23 \, \overline{H21 \, U22} \leq h(L|H20 \, \overline{U23 \, H21 \, U22}) + \Delta h(L|H20 \, \overline{U23 \, H21 \, U22}) +$$
$$h(L|U23 \, \overline{H20 \, H21 \, U22}) + \Delta h(L|U23 \, \overline{H20 \, H21 \, U22}) - [h(L|H20 \, \overline{U23 \, H21 \, U22}) + \Delta h(L|H20 \, \overline{U23 \, H21 \, U22})]$$
$$\cdot [h(L|U23 \, \overline{H20 \, H21 \, U22}) + \Delta h(L|U23 \, \overline{H20 \, H21 \, U22})]$$
erfüllt, so sind H20 und U23 potentiell selbstständige Ursachen von L, andernfalls ist (H20 U23) potentiell selbstständige Ursache von L.
Man versucht also, die linke Seite der Ungleichung möglichst klein, die rechte möglichst groß zu machen. Diese Strategie wird auch im Falle unsicher vorliegender Elemente beibehalten.

2) Bildung und Darstellung von Kausalketten

Die Selbstständigkeits-Analyse wird zunächst angewendet, um die eigentlichen Ursachen für das Leitsymptom L aus URS(L) zu bestimmen. Ist etwa V ein Verbund von Netzknoten, der als eine selbstständige Ursache erkannt wurde, so kann ein beliebiger Knoten $N_{\lambda_0} \epsilon V$ erneut als der Netzknoten fungieren, für den wiederum die eigentlichen Verursacher aus $URS(N_{\lambda_0})$ ermittelt werden.
Dieses Vorgehen läßt sich fortsetzen bis Netzknoten erreicht sind, die keine hinführenden Kausalverweise mehr besitzen.
Ist im L-Netz die Anzahl der Netzknoten und die Anzahl der Ursachen je H- oder U-Knoten nicht zu groß, so können anhand der so gebildeten Ketten kausale Zusammenhänge unmittelbar graphisch dargestellt werden. Hierzu werden
- die relevanten Teile des L-Netzes auf den Bildschirm gebracht,
- die Netzknoten mit den zugehörigen Zutreffenswahrscheinlichkeiten versehen,
- die Knoten-Verbunde, die selbstständige Ursache eines Nachfolgeknotens sind, als solche gekennzeichnet,
- die Wahrscheinlichkeitswerte angegeben, mit denen selbstständige Ursachen einen Nachfolgeknoten erzeugen,
- die kausalen Verbindungen vom verursachenden Knoten bzw. Verbund zum verursachten Knoten eingezeichnet.

Kausale Zusammenhänge lassen sich so anschaulich und suggestiv darstellen.

3) Kritische Ueberprüfung ermittelter Zusammenhänge

a) Fälschlicherweise nicht festgestellte Ereignisse

Durch das schrittweise Berücksichtigen von Ereignissen, deren Vorliegen zwar nicht gemessen, wohl aber erahnt wird, können Veränderungen erzeugt werden, die gefundene Zusammenhänge festigen oder in Frage stellen können. Sei etwa $H_{\mu 0}$ ein beliebiger H-Knoten des L-Netzes, der den E- oder U-Knoten $N_{\lambda 0}$ erzeugen kann. B sei ein (nicht notwendigerweise im L-Netz enthaltenes) Ereignis, dessen Vorliegen die Erzeugung von $N_{\lambda 0}$ durch $H_{\mu 0}$ blockieren kann.

Schema:

Wird nun festgestellt, daß $N_{\lambda 0}$ nicht vorliegt, wohl aber das blockierende Ereignis B, so kann $N_{\lambda 0}$ - (versuchsweise) als zutreffend eingestuft werden.

Beispiel 16:

Es sei
$H_{\mu 0}$ := Allergen,
$N_{\lambda 0}$ := Exanthem,
B := Cortison-Medikation.

Die Cortison-Medikation verhindert, daß ein eventuell vorliegendes Allergen ein wesentliches Symptom erzeugt. Die Einstufung von $N_{\lambda 0}$ als zutreffendes Ereignis kann als Experiment erfolgen, um zu erkennen, ob die gefundenen Erkenntnisse gefestigt sind, oder ob sich durch Änderungen, die im Bereich des Möglichen liegen, grundsätzlich andere Zusammenhänge ergeben.

b) Fälschlicherweise festgestellte Ereignisse

Es sei $H_{\mu 0}$ ein beliebiger H-Knoten des L-Netzes, der den E- oder U-Knoten $N_{\lambda 0}$ erzeugen kann; $x$ sei ebenfalls eine mögliche Ursache für $N_{\lambda 0}$, wobei aber $x$ kein Knoten des L-Netzes ist, sondern zum "diffusen Umfeld" gehört. Hierbei umfaßt ein solches diffuses Umfeld die Einflüsse durch Klima, Wetter und sonstige Alltäglichkeiten, die wegen der notwendigerweise eingeführten Umfangsbegrenzungen des L-Netzes nicht berücksichtigt werden.

Schema:

Ist das Ereignis $N_{\lambda_C}$ unglaubwürdig geworden, etwa weil es im L-Netz isoliert steht, und kann $N_{\lambda_C}$ durch eine Ursache $\chi$ des Umfeldes eine zufriedenstellende Erklärung finden, so kann das Ereignis $N_{\lambda_C}$ - (versuchsweise) als nicht zutreffend eingestuft werden.

Beispiel 17:

Es sei

$H_{\mu_0}$ := Myokarditis.

$N_{\lambda_0}$ := Belastungs-Arrhythmie,

$\chi$ := Fehlernährung.

Durch Fehlernährung, im Zusammenhang mit Alltäglichkeiten wie Anspannung oder Ärger. kann es zeitweise zu Hypoglykämien kommen, die den Kalium-Einstrom in die Körperzellen verhindern und bei einem Andauern dieses Zustands über einen längeren Zeitraum Belastungs Arrhythmien begünstigen. Falls nun das Symptom $N_{\lambda_0}$ isoliert steht und durch Begutachtung seiner Netz-Umgebung noch weiter an Glaubwürdigkeit verliert. und falls dieses Symptom durch eine vorhandene, jedoch außerhalb des Netzes liegende Ursache $\chi$ eine ausreichende Erklärung findet, so kann als Experiment für dieses Symptom die Zutreffenswahrscheinlichkeit Null gesetzt werden.

Im Experiment lassen sich so Zusammenhänge gewinnen, die wegen eingefahrener Denkweisen nicht in Betracht gezogen wurden. Durch das versuchsweise Verändern der Zutreffenswahrscheinlichkeiten einzelner Ereignisse läßt sich auch unmittelbar demonstrieren, welches Gewicht und welche Bedeutung solchen Ereignissen im Hinblick auf die vorgefundenen Kausalzusammenhänge zukommt.

**Ansprüche**

I) Anspruch 1

Verfahren zur Behebung von Störfällen durch die Propagierung von Wissen in einem Kausalnetz. dadurch gekennzeichnet, daß zunächst ein modular aufgebautes Kausalnetz aufgestellt wird. wobei jeder für den Netzaufbau verwendete Netzknoten sich zusammensetzt aus

- der Nummer und der Bezeichnung des Netzknotens,

- beliebig vielen, zum Netzknoten hinführenden Kausalverweisen mit Angabe des jeweiligen verursachenden Knotens,

- beliebig vielen, vom Netzknoten wegführenden Kausalverweisen mit Angabe des jeweiligen Netzknotens, der als Folge der Kausalverbindung anzusehen ist;

der Netzaufbau des sogenannten L-Netzes ist dadurch gekennzeichnet, daß man zunächst alle auf den Leitsymptom-Knoten (L-Knoten) hinführenden Kausalverweise an den Pfeilanfängen mit Netzknoten besetzt, und daß man dann unter Beachtung beliebig wählbarer Begrenzungsvorschriften so lange die auf diese Weise hinzugekommenen Kausalverweise erneut mit Netzknoten versieht, bis das Netz keine unbesetzten Kausalverweise mehr enthält, oder bis es die durch die Aufbau-Vorschriften definierte Größe und Zusammensetzung besitzt;

das Verfahren ist als nächstes dadurch gekennzeichnet, daß man für alle nicht direkt meßbaren Knoten $H_\mu$, $\mu$ = 1,...,m, Wertungsumgebungen WERT($H_\mu$) festlegt, wobei die Wertungsumgebung für einen beliebigen Knoten $H_{\mu_0}$

- die Menge URS($H_{\mu_0}$) der Ursachen von $H_{\mu_0}$,

- die Menge FOL($H_{\mu_0}$) der Folgen von $H_{\mu_0}$, sowie

- die Menge aller Ursachen $\neq H_{\mu_0}$ der FOL($H_{\mu_0}$) - Elemente umfaßt, daß man sodann aus den Elementen der einzelnen Wertungsumgebungen jeweils Wertungsverbunde zusammenstellt, wobei man für ein beliebiges WERT($H_{\mu_0}$)

- nicht direkt meßbare Knoten mit einer ′-Kennung versieht,

- direkt meßbare Knoten im Falle des unsicheren Vorliegens ebenfalls mit einer $'$-Kennung und im Fall des sicheren Nicht-Vorliegens mit einer — -Kennung ausstattet,
- direkt meßbare Knoten mit unbekannter Zutreffenswahrscheinlichkeit entfernt,
- Knoten $N_\lambda$, die Ursache für Elemente aus $FOL(H_{\mu 0})$ sind, ebenfalls entfernt, falls die Elemente aus dem jeweiligen Durchschnitt $FOL(N_\lambda) \cap WERT(H_{\mu 0})$ alle die Zutreffenswahrscheinlichkeit Null aufweisen, daß man mit den so gewonnenen Wertungsverbunden $W(H_\mu)$ die Wertungsgleichungen

$$p(H_\mu | H_\mu') = p(H_\mu | W(H_\mu)), \mu = 1,...,m.$$

aufstellt, auf diese Gleichungen jeweils den sogenannten L-Satz anwendet und die so erhaltenen m Gleichungen in den m Unbekannten $p(H_\mu | H_\mu')$ nach den Unbekannten auflöst, wobei für beliebiges $H_{\mu 0}$ der Ausdruck $p(H_{\mu 0} | W(H_{\mu c}))$ nur diejenigen Größen aus der Menge $\{p(H_\mu | H_\mu') \mid \mu = 1,...,m\}$ als Unbekannte enthält, deren zugehörige Knoten in $W(H_{\mu 0})$ vorkommen;
eine Kennzeichnung des Verfahrens besteht schließlich darin, daß für die Berechnung der m Unbekannten $p(H_\mu | H_\mu')$ aus den m Gleichungen Verbundwahrscheinlichkeiten erforderlich sind, für deren näherungsweise Ermittlung Stichproben erhoben werden, entweder
- eine Stichprobe auf der definierten Population, bei der jede Stichprobenausführung Angaben über die Zutreffenswahrscheinlichkeiten aller Netzknoten enthält,
- oder, falls das L-Netz nach den hierfür zu stellenden Forderungen strukturiert werden kann, für jedes nicht direkt meßbare $H_\mu$, $\mu = 1,...,m$, eine Vielzahl von Stichproben, die für beliebiges $H_{\mu 0}$ erstellt werden unter der Bedingung des Vorliegens einzelner, direkt meßbarer Elemente aus $URS(H_{\mu 0})$ oder $FOL(H_{\mu 0})$, wobei jede Ausführung Angaben über die Zutreffenswahrscheinlichkeiten aller Elemente aus $WERT(H_{\mu 0}) \cup \{H_{\mu 0}\}$ enthält;
das Verfahren ist abschließend dadurch gekennzeichnet, daß die unmittelbaren Ursachen des Leitsymptoms L unter Nutzung einer zusätzlichen, L und URS(L) umfassenden Stichprobe hinsichtlich einer sogenannten Selbstständigkeits-Eigenschaft untersucht werden, wobei z.B. für $URS(L) := \{H1, H2, H3, H4\}$ zwei beliebige Elemente aus URS(L), etwa H1 und H2 als potentiell selbstständige Ursachen von L gelten, falls

$$p(L | H1\ H2\ \overline{H3\ H4}) \leq p(L | H1\ \overline{H2\ H3\ H4}) + p(L | \overline{H1}\ H2\ \overline{H3\ H4}) - p(L | H1\ \overline{H2\ H3\ H4}) \cdot p(L | \overline{H1}\ H2\ \overline{H3\ H4})$$

erfüllt ist, andernfalls gilt (H1 H2) als potentiell selbständige Ursache von L, daß sodann durch das weitere Anwenden analoger Ungleichungen solche Netzknoten bzw. Verbunde von Netzknoten bestimmt werden, die selbstständig, d.h. ohne gegenseitige Beeinflussung den L-Knoten verursachen, und daß schließlich durch wiederholte Anwendung des Verfahrens mit stets neuem Leitsymptom auch die Ermittlung von Kausalketten ermöglicht wird.

II) Anwendung des Verfahrens nach Anspruch 1 zur Ermittlung der Ursachen pathophysiologischer Zustände bei Menschen, Tieren und Pflanzen.

III) Anwendung des Verfahrens nach Anspruch 1 zur Ermittlung der Fehlerursachen bei elektrischen und elektronischen Geräten, Motoren, Triebwerken, industriellen Anlagen.

IV) Anwendung des Verfahrens nach Anspruch 1 zur Ermittlung der Ursachen verminderter Leistung und Effektivität bei beruflichen und sportlichen Betätigungen, insbesondere für Untersuchungen in Bereichen der Sport-, Leistungs- und Ernährungs-Physiologie, sowie der Trainingslehre.

Europäisches
Patentamt

**EUROPÄISCHER RECHERCHENBERICHT**

Nummer der Anmeldung

EP 89 10 9521

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | ARTIFICIAL INTELLIGENCE, Band 29, Nr. 3, September 1986, Seiten 241-288, Elsevier Science Publishers B.V., Amsterdam, NL; J. PEARL: "Fusion, propagation, and structuring in belief networks" * Insgesamt * | 1-4 | G 06 F 9/44 G 06 F 15/40 |
| Y | EP-A-0 281 682 (P. LIEBEL) * Das ganze Dokument * | 1-4 | |
| A | THE SECOND CONFERENCE ON ARTIFICIAL INTELLIGENCE APPLICATIONS, Miami, 11.-13. Dezember 1985, Seiten 313-319, IEEE, New York, US; S.I. GALLANT: "Automatic generation of expert systems from examples" | | |
| A | PROCEEDINGS OF THE 1987 IEEE INTERNATIONAL CONFERENCE ON SYSTEMS, MAN, AND CYBERNETICS, Alexandria, 20.-23. Oktober 1987, Seiten 559-563, IEEE, New York, US; A. GOICOECHEA et al.: "Expert system models for inference with imperfect knowledge: a comfanatic study" | | RECHERCHIERTE SACHGEBIETE (Int. Cl.5) G 06 F 9/00 G 06 F 15/00 |
| A | I.E.E. PROCEEDINGS-D/CONTROL THEORY AND APPLICATIONS, Band 134, Teil D, Nr. 4, Juli 1987, Seiten 231-237, Stevenage, Herts, GB; D. PANG et al.: "Reasoning with uncertain information" | | |

Der vorliegende Recherchenbericht wurde für alle Patentansprüche erstellt

| Recherchenort | Abschlußdatum der Recherche | Prüfer |
|---|---|---|
| DEN HAAG | 26-01-1990 | POPINEAU G.J.P. |